Europäisches Patentamt

(19) European Patent Office

Office européen des brevets

(11) Publication number: **0 098 117**
**B1**

(12) **EUROPEAN PATENT SPECIFICATION**

(45) Date of publication of patent specification: **08.10.86**

(51) Int. Cl.⁴: **G 06 K 11/06**

(21) Application number: **83303645.2**

(22) Date of filing: **24.06.83**

(54) An electronic input board system.

(30) Priority: **26.06.82 JP 110267/82**

(43) Date of publication of application:
**11.01.84 Bulletin 84/02**

(45) Publication of the grant of the patent:
**08.10.86 Bulletin 86/41**

(84) Designated Contracting States:
**DE FR GB IT NL**

(56) References cited:
**DD-A-1 502 268**
**US-A-4 318 096**

Courier Press, Leamington Spa, England.

## Description

This invention relates to an electronic input board system which can register color information concerning a hand-held writing instrument employed for writing on the input board. Such a system may be employed in facilitating conferences held between remote conference rooms.

It has been desired to render possible the holding of a conference involving a plurality of spaced-apart conference rooms. There has thus been developed a conference system whereby such a conference may be carried out by interconnecting isolated conference rooms by telephone lines or leased lines. A system has been developed whereby not only voice signals can be transmitted between the conference rooms, but also visible letters and figures.

In general, a blackboard is employed for such a conference, and the conference can be effected efficiently if the contents written on the blackboard can be transmitted between the mutually isolated conference rooms. A large amount of information can be exchanged in this manner.

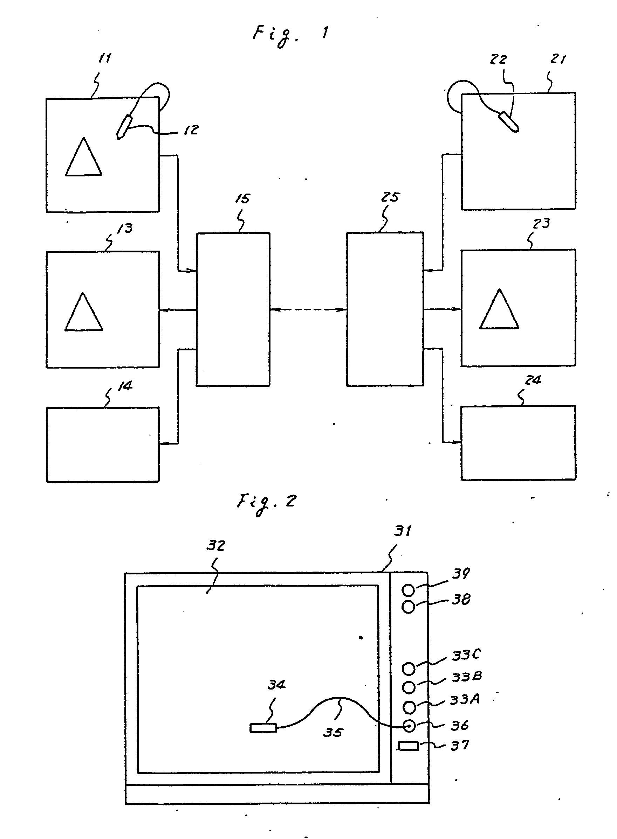

An electronic blackboard has been proposed in order to meet such a requirement. This electronic blackboard provides an entry region and a coordinate detector. The coordinate detector detects the coordinate of a pen on the entry region, and this coordinate is transmitted to the display units of all participating conference rooms. An electronic blackboard developed for the purpose outlined above is now explained with reference to Figure 1.

In Figure 1, 11, 21 are hand written input boards or blackboards having a tabulation function; 12, 22 are pens, such as felt pens, for inputting hand written information onto the boards 11, 21; 13, 23 are display units such as color projectors or CRT displays; 14, 24 are hard copying devices such as facsimile equipment; and 15, 25 are communication control equipments.

The hand written input boards 11, 21 are provided with a plurality of detection lines, for example extending in the X and Y directions respectively, and the pens 12, 22 are provided with magnetic field generators. When a piece of information is hand written with a pen on the associated board, voltage is induced in the detection lines extending in the X and Y directions of the hand written input board, by the magnetic field from the magnetic field generator in the pen. The voltage is detected as being information defining XY coordinates of the pen at any time, whereby the hand written input information can be recognised.

Alternatively, XY coils which generate magnetic fields which are different in phase in dependence upon position within the fields may be provided on a hand written input board. The magnetic field is detected by a sensor provided in the associated pen, and the phase of the detected magnetic field is compared with a reference phase, whereby the XY coordinate information relating to the pen position can be obtained.

The hand written input information is transmitted to remote equipment through the communication control equipment 15, 25. Therefore, a triangle entered on the hand written input board 11, for example, is displayed both on the home display unit 13 and on the remote display unit 23.

The displayed contents of display units 13, 23 are output as a hard copy by the hard copying units 14, 24 as required. Since hand written input information can also be transmitted within the voice frequency bandwidth, it can also be transmitted through a telephone line on the basis of frequency multiplexing with voice information of the telephone system (not shown). Accordingly, a conference between remote rooms can be executed easily using visual figures.

The hand written content, however complicated it is, can be understood more easily by introducing various colors into the input data for the hand written input boards 11, 12. For this purpose, it is necessary to input color information relating to the pens 12, 22. As a color information input means, it is possible to designate the colors to switches as disclosed, for example, in the Japanese Patent Publication No. 48359/1980. However, this method is disadvantageous in that it is very troublesome to operate color designating switches during a conference, and moreover the color designated by a switch may sometimes differ from the actual color data employed, owing to erroneous operation. Alternatively, it may be possible to connect the different-colored pens to the hand written input boards 1, 12 through respective cords and then input the desired color information from a selected pen through the associated cord. This method, however, is also disadvantageous in that the cords may become entangled because many lines of cords are necessary, thus degrading operability.

According to the present invention, there is provided an electronic input board system in which information being written on an input board by a hand-held writing instrument can be displayed on a display unit by inputting to the display unit positional coordinate signals indicating the positional coordinates of the writing instrument with respect to the input board, characterised in that the electronic input board system comprises:

holders which hold writing instruments of different colors whilst they are not being used, each holder being associated with a respective color of writing instrument;

detectors which are associated with said holders to detect whether or not each holder contains a writing instrument; and

a color information generator for generating color information for the display unit in dependence upon said detectors such that that holder from which a writing instrument has been removed to be used indicates the associated writing instrument color.

An embodiment of the invention may provide a color information input system which does not require any particular operation for inputting the color information.

An embodiment of the invention may provide a color information input system which does not deteriorate the operability of an electronic blackboard.

An embodiment of the present invention may generate color information by identifying a pen being used.

For a better understanding of the invention and to show how it may be put into effect, reference will now be made, by way of example, to the accompanying drawings in which:

Figure 1 is a block diagram of an electronic blackboard system to which the present invention may be applied;

Figure 2 is an outline of the front view of an embodiment of the present invention;

Figure 3 is the pen holder and detectors of Figure 2;

Figure 4 is a part of a cross-sectional view of a pen;

Figure 5 is a block diagram of a controller of an embodiment of the present invention;

Figure 6 is a detail block diagram of Figure 5; and

Figure 7 is a block diagram of a circuit for preventing two or more color signals being set simultaneously.

Figure 2 is the outline of a front view of an embodiment of the present invention. A hand written input board 31 provides an entry area 32 which is similar to a so-called white board, and has at its rear surface a plurality of detection lines extending in the X and Y directions. The detection lines are scanned at a constant period.

A writing means 34 comprises, as will be explained later, a felt pen for entering data onto the entry area 32, and a support for supporting the pen when it is in use. Moreover, pen holders (sometimes called stockers) 33A to 33C are provided extending perpendicular to the paper surface, in order to hold the felt pen when it is removed from its support. These pen holders hold felt pens of different respective colors. In this embodiment, three holders are indicated, allowing three colors, but it is of course possible to use more colors by providing further holders. 35 is a cord, 36 is a connector, 37 is a power switch.

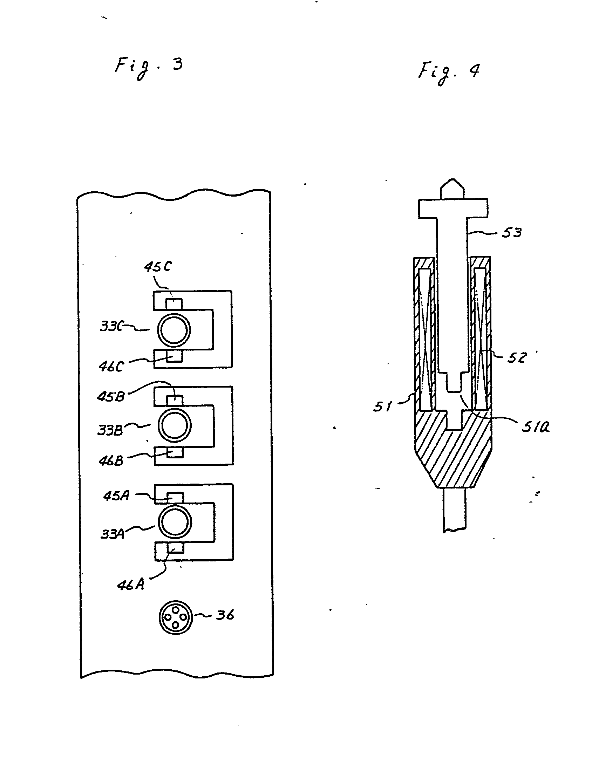

Figure 3 shows the pen holders, together with associated detectors. These detectors comprise respective ones of light sources 45A to 45C and light sensors 46A to 46C. When a felt pen is present in a holder, the light emitted from the associated light source is blocked by the pen and does not enter the associated sensor. When a pen is taken out of the holder however, the light then enters the sensor. Thereby, a pen which is currently being used can be known by detecting the output of the light sensor. Since a particular holder is intended to hold a pen of a particular color, one can always know the color of the pen being used, because one will know from which holder the pen has been removed, and thus the color of the pen.

In the above example, the detector is arranged for optical detection, but it is of course possible to detect the use of a pen mechanically. Moreover, it is also possible to issue an alarm if two or more pens are removed simultaneously. It is possible to allow only one felt pen to be used at a time, by providing a mechanical lock.

Figure 4 is a cross-sectional view of a pen comprising a support 51 and a magnetic field generator coil 52. 53 is a so-called felt pen of desired color, and it is removably mounted in the space 51A of the support 51. The color of the felt pen can be identified from the detection signal of that detector which is associated with the holder from which the felt pen has been removed. The content of information which is hand written using the pen can be obtained by detecting the magnetic field generated by the coil 52 by scanning the detection lines associated with the hand written input board.

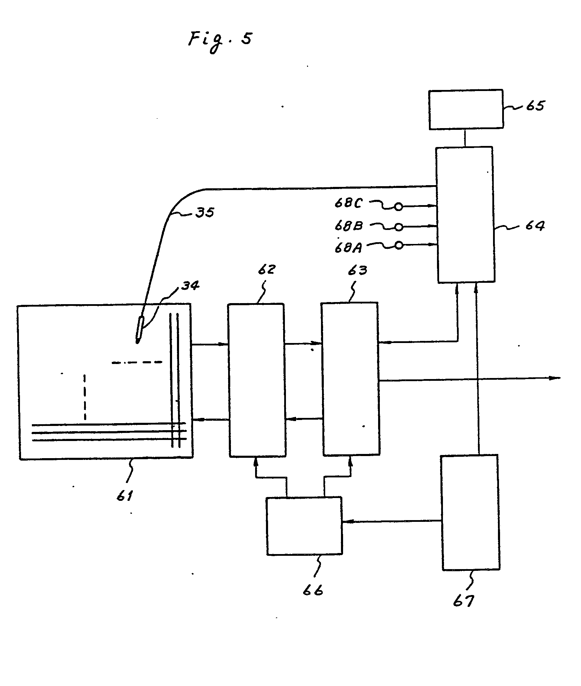

Figure 5 is a block diagram of a major part of an embodiment of the present invention. The tabulator 61 of the hand written input board is provided with detection lines arranged in the X and Y directions with an interval depending upon the detection resolution. The field generated by the magnetic field generator 52 of support 51 is detected with these detection lines. A detection controller 62 discriminates the scanning of the detection lines, and the maximum detection lines of signal level obtained by such scanning, and then transfers the XY coordinate information of the detection lines to a tabulation controller 63.

A pen controller 64 controls the magnetic field generator 52 and transfers the color information to the tabulation controller 63 in accordance with the detected information sent from the detectors 68A to 68C. A lamp indicator 65 indicates power ON, hand written input ready, and alarm conditions. A tabulator power supply 66 supplies the operating power to the detection controller 62 and tabulation controller 63 and is provided with a noise eliminator. A power supply 67 has a circuit for supplying respective powers from an AC power source, and operates when the power switch of Figure 2 is turned ON.

The tabulation controller 63 receives data from the detection controller 62 and pen controller 64, and transfers the coordinate information and color information of the felt pen to the communication controller (see Figure 1). In the case of transmitting a signal through a telephone line, the communication controller is capable of transmitting such information together with telephoned voice information by differential coding the hand written input information with the frequency of 1.9 to 2.3 kHz, among the voice band frequency of 0.3 to 3.4 kHz. At the receiving side, the voice information and hand written input information are separated by a filter and only the hand written input information is applied to the display unit and then displayed thereon. At this time, since the color information is also transmitted, color pictures can be displayed on the display unit.

When a desired felt pen is taken out of its holder, its removal is detected by the associated detector 68A to 68C and the detection signal is input to the pen controller 64. Thereafter, when the selected pen is mounted in the support 51 and then information is written onto the tabulator 61 by the pen, the magnetic field from the magnetic field generator 52 provided in the support 51 is detected by the detection controller 62 as explained above, and is then input to the tabulation controller 62.

The tabulation controller 62 combines the XY coordinate sent from the detection controller 62 and the color information sent from the pen controller 64, and then transmits the signal serially to the display units of the home system and the remote system.

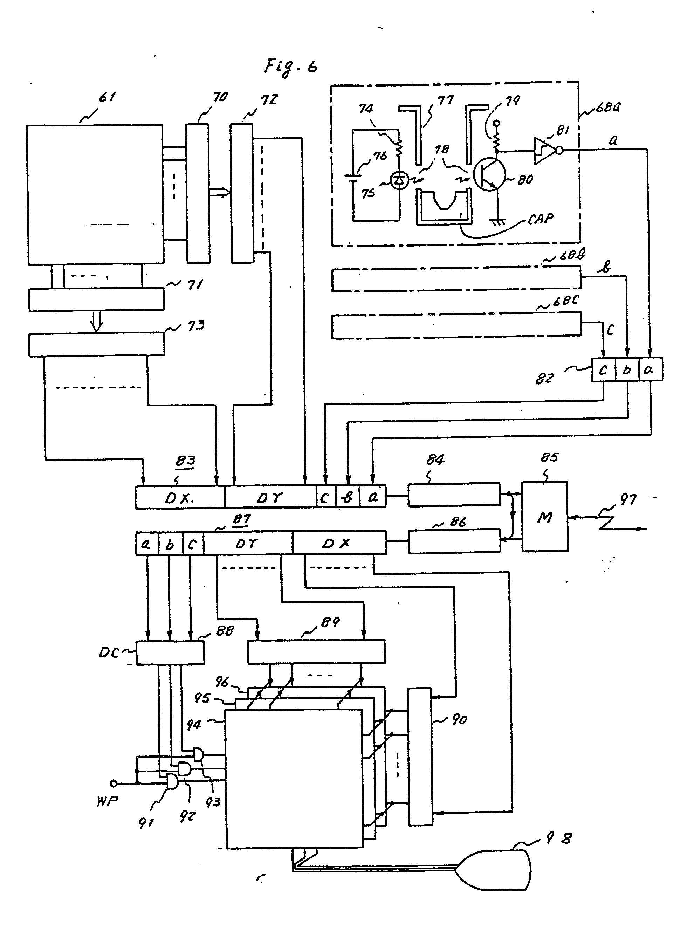

Figure 6 is a practical embodiment of the present invention. In this Figure, 70 is a Y-axis scanner; 71 is an X-axis scanner; 72 is a Y-coordinate buffer; 73 is an X-coordinate buffer; 74 is an LED adjusting resistor; 75 is an LED; 76 is a power supply; 77 is a pen holder case; 78 is an aperture; 79 is a photo-transistor adjusting resistor; 80 is a photo-transistor; 81 is a comparator; 82 is a color information buffer; 83 is a transmitting buffer; 84 is a transmitting first-in and first-out buffer; 85 is a modem; 86 is a receiving first-in first-out buffer; 87 is a recieving buffer; 88 is a decoder; 89 is an X-axis driver; 90 is a Y-axis driver; 91 to 93 are AND gates; 94 is a red frame memory; 95 is a blue frame memory; 96 is a green frame memory; and CAP is a cap.

First, the XY coordinates are detected by the X- and Y-axis scanners 71, 70 and these data are then input to the X- and Y-axis coordinate buffers 73, 72.

The coordinates of Y coordinates buffer 72 and X coordinate buffer 73 are input in parallel to the domains DX and DY of the transmitting buffer 83.

Color information is input in the following manner. Here, the detector 68a is designated for a red felt pen, while 68b for a blue felt pen and 68c for a green felt pen, respectively. an LED 75 and a photo-transistor 80 are provided face to face at the aperture 78 of the holder case 77, and the LED 75 always allows a current to flow from the power supply 86 through the adjusting resistor 74.

When a felt pen is taken out of the holder case 77, the light emitted from the LED 75 enters the photo-transistor 80. Thereby, the photo-transistor 80 turns ON, reducing a collector voltage.

This collector voltage is compared with a reference value by the comparator 81. If it falls below the reference value, the color signal a is output and is set to the domain a of the color information buffer 82.

Any color signal b sent from the detector 68b is set to the domain b of the color information buffer 82, and any color signal c sent from the detector 68c is set to the domain c.

The content of the color information buffer 82 is set in parallel to the domains a, b, c of the transmitting buffer 83.

When contents are respectively set to the domains DX, DY, a, b and c, the transmitting buffer 83 inputs these contents serially to the modem 85 through the transmitting first-in and first-out register 84 and simultaneously sets them sequentially to the receiving first-in and first-out register 86. The modem M modulates the input X coordinate signal, Y coordinate signal and color signal and then sends it to the line 97.

An output of the receiving first-in and first-out register 86 is, on the other hand, serially set to the receiving buffer 87.

The color information of the domains a to c is decoded by the decoder 88 and opens the appropriate one of corresponding AND gates 91 to 93. Thereby, the write pulse WP is given to the appropriate one of frame memories 94 to 96.

The Y coordinate signal in the domain DY of the receiving buffer register 87 is transferred to the Y axis driver 89, while the X coordinate signal in the domain DX is transferred to the X axis driver. Thereby, data is entered to that frame memory to which the write pulse WP is given.

Meanwhile, receiving information sent from the remote system is demodulated by the modem 85 and is transferred to the receiving buffer register 87 through the receiving first-in and first-out register 86.

The contents of the frame memories 94 to 96 are read periodically and displayed on the display unit 98. The cap CAP is provided in order to prevent the pen point becoming dry.

As explained previously, when a desired pen is taken out of its holder, the detection signal is directly used as the corresponding color signal and moreover is used for buffer selection in the embodiment of the present invention.

A half-duplex communication system is employed for communication with the remote system. Therefore, hand written information of the home system and remote system do not collide or interfere in the receiving first-in and first-out buffer 86.

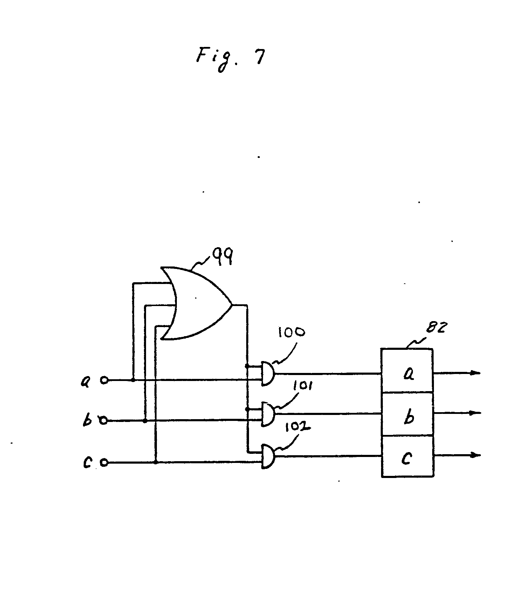

Figure 7 is an example of a circuit for inhibiting two or more color signals being set simultaneously. In this Figure, 99 is an exclusive-OR gate and 100 to 102 are AND gates.

The exlusive-OR gate 99 outputs a high level output to each one of the AND gates 100 to 102 when any one alone of color signals a to c is being output. Therefore, the color information is set to the appropriate one of the domains a to c of the color information buffer 82 when only one color signal is output. If two or three color signals are output simultaneously, the OR gate 99 outputs a low level signal which disables gates 100 to 102.

As explained previously, the information entry means of the described and illustrated electronic blackboard comprises a felt pen and its support. In addition, the holders which accommodate the felt pens are provided with detectors, and the color of the felt pen being used can be detected from a detection signal of the associated detector. Accordingly, color information can be automatically and accurately obtained. Since only one pen support is necessary, the cord of the support will not become entangled with other cords. Moreover, data entry can be made easily to the entry data of the hand written input board.

**Claims**

1. An electronic input board system in which information being written on an input board (32) by a hand-held writing instrument (53) can be displayed on a display unit by inputting to the display unit positional coordinate signals indicating the positional coordinates of the writing instrument (53) with respect to the input board (32), characterised in that the electronic input board system comprises:

holders (33A to 33C) which hold writing instruments (53) of different colors whilst they are not being used, each holder (33A to 33C) being associated with a respective color of writing instrument (53);

detectors (45A to 45C, 46A to 46C) which are associated with said holders (33A to 33C) to detect whether or not each holder (33A to 33C) contains a writing instrument (53); and

a color information generator (64) for generating color information for the display unit in dependence upon said detectors (45A to 45C, 46A to 46C) such that that holder from which a writing instrument has been removed to be used indicates the associated writing instrument color.

2. A system according to claim 1, comprising a support (51) for supporting a selected writing instrument (53) while said information is being written thereby, the support (51) being cooperable with a positional coordinate sensor (61, 62) which can thereby provide said positional coordinate signals.

3. A system according to claim 2, wherein the support (51) comprises a signal generator (52) for generating a signal to be detected by the positional coordinate sensor (61, 62).

4. A system according to claim 1, 2 or 3, wherein each of said detectors comprises a light emitting element (45A to 45C) and a light sensitive element (46A to 46C) which detects the light emitted from said light emitting element.

5. A system according to any preceding claim, wherein each holder (33A to 33C) comprises a hollow cylindrical body (77) with one end open and a cap (CAP), to engage with the point of a writing instrument, provided at the bottom of said cylindrical body (77).

6. A system according to claims 4 and 5 combined, wherein a pair of holders (78) is provided in a direction crossing the axis of said cylindrical body (77), and the light emitting element (75) is provided adjacent one hole while the light sensitive element (80) is provided adjacent the other hole.

7. A system according to any preceding claim, comprising:

a transmitting register (83) and a receiving register (87) which each provide an X coordinate domain (DX) for setting an X coordinate signal, a Y coordinate domain (DY) for setting a Y coordinate signal, and a color information domain (cba, abc) for setting a signal sent from said detectors;

a transmitting means (84) for serially transmitting the contents of said transmitting register (83);

a means (86) for transferring the content of said transmitting register (83) to the receiving register (87);

a selecting means (88) for selecting one of a plurality of frame memories corresponding to respective colors of writing instrument in accordance with an output of the color information domain (abc) of said receiving register (87); and

a driver (89, 90) for writing information to a selected frame memory in accordance with the X coordinate and Y coordinate in the X coordinate and Y coordinate domains (DX, DY) of said receiving register (87).

8. A system according to any preceding claim, wherein the input board (32) is an electronic blackboard.

9. A system according to any preceding claim, and comprising a security means (99, 100, 101, 102) for preventing the color information generator indicating more than one color simultaneously.

10. A system according to claim 9, wherein said security means comprises a gate (100, 101, 102) to conduct a color information signal, and a control gate (99) which disables the other gate (100, 101, 102) if more than one color is indicated simultaneously.

**Patentansprüche**

1. Elektronisches Eingabetafelsystem, bei dem Information, die von einem in der Hand gehaltenen Schreibinstrument (53) auf eine Eingabetafel (32) geschrieben wird, auf einer Anzeigeeinheit, durch Eingeben der Positionskoordinatensignal, welche die Positionskoordinaten des schreibenden Elements (53) in Bezug auf die Eingabetafel (32) anzeigen, in die Anzeigeeinheit, angezeigt werden kann, dadurch gekennzeichnet, daß das elektronische Eingabetafelsystem umfaßt:

Halter (33A bis 33C), welche Schreibinstrumente (53) verschiedener Farben halten, während sie nicht in Benutzung sind, von denen jeder Halter (33A bis 33C) einer entsprechenden Farbe des Schreibinstruments (53) zugeordnet ist,

Detektoren (45A bis 45C, 46A bis 46C), die den genannten Haltern (33A bis 33C) zugeordnet sind, um festzustellen, ob jeder Halter (33A bis 33C) ein Schreibinstrument (53) enthält oder nicht; und

einen Farbinformationsgenerator (64) zur Erzeugung von Farbinformation für die Anzeigeeinheit in Abhängigkeit von solchen Detektoren (45A bis 45C, 46A bis 46C), so daß jener Halter, aus dem ein Schreibinstrument zur Benutzung entfernt worden ist, die zugeordnete Schreibinstrumentfarbe anzeigt.

2. System nach Anspruch 1, mit einer Unterstützung (51) zum Unterstützen eines ausgewählten Schreibinstruments (53) während mit diesen die genannte Information geschrieben wird, wobei die Unterstützung (51) mit einem Positionskoordinatensensor (61, 62) zusammenarbeiten kann, welcher dadurch die genannten Positionskoordinaten liefern kann.

3. System nach Anspruch 3, bei welchem die Unterstützung (51) einen Signalgenerator (52) zur Erzeugung eines Signals umfaßt, welches durch den Positionskoordinatensensor (61, 62) erfaßt werden kann.

4. System nach Anspruch 1, 2 oder 3, bei welchem jeder der Detektoren ein Licht emittierendes Element (45A bis 45C) und ein lichtempfindliches Element (46A bis 46C) umfaßt, welches Licht erfaßt, das von dem genannten Licht emittierenden Element ermittelt wurde.

5. System nach einem der vorhergehenden Ansprüche, bei welchem jeder Halter (33A bis 33C) einen hohlen zylindrischen Körper (77) umfaßt, der ein offenes Ende hat, und eine Kappe (CAP), die an dem Boden des genannten zylindrischen Körpers (77) vorgesehen ist, un mit der Spitze des Schreibinstruments zum Eingriff zu kommen.

6. System nach einem der Ansprüche 4 und 5 in Kombination, bei welchem ein Paar von Löchern (78) in einer Richtung vorgesehen ist, welche die Achse des genannten zylindrischen Körpers (77) kreuzt, und das Licht emittierende Element (75) neben einen Loch vorgesehen ist, während des lichtempfindliche Element (8) neben dem anderen Loch vorgesehen ist.

7. System nach einem der vorhergehenden Ansprüche, mit:

einem Senderegister (83) und einem Empfangsregister (87), welche jeweils eine X-Koordinatenbereich (DX) zur Einstellung eines X-Koordinatensignals, einen Y-Koordinatenbereich (DY) zur Einstellung eines Y-Koordinatensignals, und einen Farbinformationsbereich (cba, abc) zur Einstellung eines von den genannten Detektoren gesendeten Signals vorsehen;

einer Sendeeinrichtung (84) zur seriellen Übertragung des Inhalts des genannten Senderegisters (83);

einer Einrichtung (86) zur Übertragung des Inhalts des genannten Senderegisters (83) zu dem Empfangsregister (87);

einer Auswahleinrichtung (88) zur Auswahl eines von vielen Rahmenspeichern, die den jeweiligen Farben des Schreibinstruments entsprechen, in Übereinstimmung mit einem Ausgang des Farbinformationsbereichs (abc) des genannten Empfangsregisters (87);

einem Treiber (89, 90) zum Schreiben von Information in einen ausgewählten Rahmenspeicher in Übereinstimmung mit der X-Koordinate und der Y-Koordinate in den X-Koordinaten- und Y-Koordinatenbereichen (DX, DY) des empfangenden Registers (87).

8. System nach einem der vorhergehenden Ansprüche, bei welchem die Eingabetafel (32) eine elektronische Tafel ist.

9. System nach einem der vorhergehenden Ansprüche, und mit einer Sicherheitseinrichtung (99, 100, 101, 102), welche verhindert, daß der Farbinformationsgenerator mehr als eine Farbe gleichzeitig anzeigt.

10. System nach Anspruch 9, bei welchem die genannte Sicherheitseinrichtung ein Gate (100, 101, 102) umfaßt, um ein Farbinformationssignal zu leiten, und ein Steurgate (99), welches das andere Gate (100, 101, 102) sperrt, wenn mehr als eine Farbe gleichzeitig angezeigt wird.

**Revendications**

1. Système de tableau d'entrée électronique dans lequel une information en cours d'écriture sur un tableau d'entrée (32) au moyen d'un instrument d'écriture (53) à tenir à la main peut être affichée sur une unité d'affichage par application à l'unité d'affichage de signaux de coordonnées de position indiquant les coordonnées de position de l'instrument d'écriture (53) relativement au tableau d'entrée (32), caractérisé en ce que le système de tableau d'entrée électronique comprend:

— des supports (33A à 33C) qui portent des instruments d'écriture (53) de différentes couleurs alors que ceux-ci ne sont pas en cours d'utilisation, chaque support (33A à 33C) étant associé à une couleur respective d'instrument d'écriture (33A à 33C);
— des détecteurs (45A à 45C, 46A à 46C) qui sont associés auxdits supports (33A à 33C) ainf de détecter si chaque support (33A à 33C) contient ou non un instrument d'écriture (53); et
— un générateur (64) d'information de couleur servant à produire une information de couleur à destination de l'unité d'affichage en fonction desdits détecteurs (45A à 45C, 46A à 46C) de sorte que le support duquel un instrument d'écriture a été retiré pour être utilisé indique la couleur de l'instrument d'écriture associé.

2. Système selon la revendication 1, comprenant un porte-crayon (51) servant à porter un instrument d'écriture (53) sélectionné tandis que ladite information est en train d'être écrite par celui-ci, le porte-crayon (51) pouvant coopérer avec un capteur de coordonnées de position (61, 62) qui peut donc fournir lesdits signaux de coordonnées de position.

3. Système selon la revendication 2, où le porte-crayon (51) comprend un générateur de signaux (52) qui produit un signal devant être détecté par le capteur (61, 62) de coordonnées de position.

4. Système selon la revendication 1, 2 ou 3, où chacun desdits détecteurs comprend un élément émetteur de lumière (45A à 45C) et un élément sensible à la lumière (46A à 46C) qui détecte la lumière émise par ledit élément émetteur de lumière.

5. Système selon l'une quelconque des revendications précédentes, où chaque support (33A à 33C) comprend un corps cylindrique creux (77) ayant une extrémité ouverte et un capuchon (CAP), pour venir en contact avec la pointe de l'instrument d'écriture, qui est placé au fond dudit corps cylindrique (77).

6. Système selon les revendications 4 et 5 combinées où une paire de trous (78) est prévue suivant une direction croisant l'axe dudit corps cylindrique (77), et l'élément émetteur de lumière (75) est placé au voisinage d'un trou tandis que l'élément sensible à la lumière (80) est placé au voisinage de l'autre trou.

7. Système selon l'une quelconque des revendications précédentes, comprenant:

— un registre de transmission (83) et un registre de réception (87) qui fournissent chacun un domaine (Dx) de coordonnée X permettant de positionner un signal de coordonnée X, un domaine (Dy) de coordonnée Y servant à positionner un signal de coordonnée Y, et un domaine (cba, abc) d'information de couleur servant à positionner un signal délivre par lesdits détecteurs;
— un moyen de transmission (84) servant à transmettre en série le contenu dudit registre de transmission (83);
— un moyen (86) servant à transférer le contenu dudit registre de transmission (83) au registre de réception (87);

— un moyen de sélection (88) servant à sélectionner une parmi plusieurs mémoires d'image correspondant à des couleurs respectives d'instrument d'écriture en fonction d'un signal de sortie du domaine d'information de couleur (abc) dudit registre de réception (87); et
— un dispositif d'excitation (89, 90) permettant d'écrire l'information dans une mémoire d'image sélectionnée en fonction de la coordonnée X et de la coordonnée Y se trouvant dans les domaines de coordonnée X et de coordonnée Y (DX, DY) dudit registre de réception (87).

8. Système selon l'une quelconque des revendications précédentes, où le tableau d'entrée (32) est un tableau noir électronique.

9. Système selon l'une quelconque des revendications précédentes, comprenant un moyen de sécurité (99, 100, 101, 102) servant à empêcher que le générateur d'information de couleur indique plus d'une couleur à la fois.

10. Système selon la revendication 9, où ledit moyen de sécurité comprend une porte (100, 101, 102) servant à conduire un signal d'information de couleur et une porte de commande (99) qui invalide les autres portes (100, 101, 102) s'il est indiqué plus d'une couleur à la fois.

Fig. 1

Fig. 2

Fig. 3

Fig. 4

45C

33C

46C

45B

33B

46B

45A

33A

46A

36

53

52

51

51a

Fig. 5

Fig. 6

Fig. 7